# EUROPÄISCHE PATENTSCHRIFT

(11) **EP 1 279 328 B1**
(45) Veröffentlichungstag und Bekanntmachung des Hinweises auf die Patenterteilung: **25.08.2004**
(21) Anmeldenummer: 02013574.5
(22) Anmeldetag: 20.06.2002
(51) Int. Cl.: A01J 5/04, A01J 5/007, A01J 7/00, A01J 5/08

(54) **Verfahren und Vorrichtung zur Unterbrechung oder Ausbildung einer strömungstechnischen Verbindung zwischen wenigstens einem Melkbecher und einer Milchleitung**
Method and device for disconnecting or establishing a flow connection between at least a teat cup and a milk line
Méthode et appareil pour déconnecter ou établir une connexion de flux entre au moins un gobelet trayeur et une conduite de lait

(30) Priorität: 26.07.2001 DE 10136091
(43) Veröffentlichungstag der Anmeldung: 29.01.2003
(73) Patentinhaber: WestfaliaSurge GmbH, 59302 Oelde (DE)
(72) Erfinder: Krone, Otto, 49832 Beesten (DE); Stolte, Friedrich, 33790 Halle-Kölkebeck (DE)
(74) Vertreter: Neumann, Ditmar

(56) Entgegenhaltungen:
- EP-A- 0 903 078
- GB-A- 194 288
- GB-A- 737 834
- US-A- 2 986 117

## Beschreibung

Der Gegenstand der Erfindung bezieht sich auf ein Verfahren sowie auf eine Vorrichtung zur Unterbrechung oder Ausbildung einer strömungstechnischen Verbindung zwischen wenigstens einem Melkbecher und einer Milchleitung.

Beim maschinellen Melken wird die gemolkene Milch vom Melkbecher über einen Melkschlauch in eine Milchleitung abtransportiert. Hierzu herrscht in der Milchleitung ein Unterdruck. Vakuumverluste führen bei der Melkanlage zu hohen Druckschwankungen, die vermieden werden sollen. Vakuumverluste können auch während des Ansetzvorgangs entstehen. Eine zweite Ursachenquelle für Vakuumverluste sind abgeschlagene oder verlorene Becher.

Um derartige Vakuumverluste zu vermeiden sind bereits unterschiedliche Lösungsvorschläge bekannt geworden.

Durch die EP 0 903 078 A1 ist eine Melkbecheranordnung mit einer eine Eintrittsöffnung aufweisenden Zitzenaufnahme, die durch eine elastische Zitzenhülse begrenzt ist, bekannt. Die Melkbecheranordnung hat einen Anschlussstutzen für eine Melkleitung, wobei im Strömungsweg unterhalb der Zitzenaufnahme eine Ventilanordnung mit einem Ventilraum ausgebildet ist, die einen Ventilkörper aufweist, durch den der Strömungsweg in einer Schließstellung geschlossen und in einer Offenstellung geöffnet ist. An der Melkbecherhülse ist ein mit dem Ventilkörper verbundenes Betätigungselement vorgesehen, das zum Schließen des Strömungsweges von der Eintrittsöffnung weg oder zum Öffnen des Strömungsweges in Richtung der Eintrittsöffnung verschieblich ist.

Durch die EP 0 566 977 A1 ist ein Abschlussventil in einer Saugleitung, insbesondere zur Anbringung im unteren Bereich eines Melkbechers bekannt. Das Abschlussventil weist ein zwischen einer geöffneten und einer geschlossenen Stellung umsteuerbares, mit einer Membrane zusammenwirkendes Ventilorgan auf. Der Umsteuervorgang erfolgt entweder automatisch in Abhängigkeit von dem im Melkbecherinnenraum herrschenden Druck. Ein manuelles Öffnen oder Schließen des Ventils erfolgt durch eine Bewegung des Melkbechers in axialer Richtung oder auch durch seitliche Bewegung des Melkbechers. Die Membrane ist ringförmig ausgebildet. Sie ist derart geformt, dass sie nach Überwindung einer, praktisch eine Umschnapp-Position darstellenden Mittelstellung in beiden Endstellungen verharrt, wie sie in den Figuren 1 und 2 der EP 0 566 977 A1 dargestellt sind. Hierbei bildet die Membrane einen Teil des kurzen Milchschlauchs. Es besteht daher die Gefahr, dass durch Krafteinwirkung auf den Melkbecher beziehungsweise auf den kurzen Melkschlauch die Membrane in eine Stellung zurückspringt, in der das Abschlussventil unabsichtlich geöffnet oder geschlossen wird.

Durch die GB-A-737,834 sind Verfahren und Vorrichtung zur Unterbrechung oder Ausbildung einer strömungstechnischen Verbindung zwischen wenigstens einem Melkbecher und einer Milchleitung, in der ein Unterdruck herrscht, bekannt. Innerhalb einer Kammer, die im Strömungsweg einer Milch angeordnet ist, ist ein Ventilkörper vorgesehen. Der Ventilkörper wirkt mit einer Feder zusammen. Die Feder drückt den Ventilkörper von einem Ventilsitz weg, wenn der Melkbecher an eine Zitze eines Tieres angesetzt ist.

Hiervon ausgehend liegt der vorliegenden Erfindung die Zielsetzung zugrunde, ein Verfahren und eine Vorrichtung zur Unterbrechung oder Ausbildung einer strömungstechnischen Verbindung zwischen wenigstens einem Melkbecher und einer Milchleitung anzugeben, durch das beziehungsweise durch die sichergestellt wird, dass eine strömungstechnische Verbindung erst dann hergestellt wird, wenn das Melkzeug angesetzt worden ist.

Ein weiteres Ziel ist es, ein Verfahren beziehungsweise eine Vorrichtung anzugeben, durch die sichergestellt wird, dass bei Abfall eines Melkbechers die strömungstechnische Verbindung unterbrochen wird.

Diese Zielsetzungen werden erfindungsgemäß durch ein Verfahren mit den Merkmalen des Anspruchs 1, beziehungsweise durch eine Vorrichtung mit den Merkmalen des Anspruchs 5 gelöst. Vorteilhafte Weiterbildungen und Ausgestaltungen sind jeweils Gegenstand der abhängigen Ansprüche.

Nach einem erfinderischen Gedanken wird ein Verfahren zur Unterbrechung oder Ausbildung einer strömungstechnischen Verbindung zwischen einem Melkbecher und einer Milchleitung, in der ein Unterdruck herrscht, vorgeschlagen. Im Milch-Strömungsweg ist eine Vorrichtung vorgesehen. Die Vorrichtung hat eine Membrane, die teilweise eine Kammer mit einem Anschlussstutzen begrenzt. Des weiteren ist ein Ventilorgan vorgesehen, das mit der Membrane zusammenwirkt. Das Ventilorgan ist durch einen ersten Ventilkörper und einen zweiten Ventilkörper gebildet. Im Milch-Strömungsweg ist ein Durchlass ausgebildet, der durch den ersten oder den zweiten Ventilkörper schließbar ist. Des weiteren ist ein Bypass-Kanal vorgesehen, der in Strömungsrichtung der Milch betrachtet, den Raum vor dem Durchlass mit einem Raum hinter dem Durchlass verbindet. Nach dem erfindungsgemäßen Verfahren wird vorgeschlagen, dass zunächst die Kammer mit einem Druck beaufschlagt wird, der größer ist, als der in der Melkleitung herrschende Unterdruck. Bevor oder während eines Ansetzens des mindestens einen Bechers an eine Zitze wird die Kammer mit einem Druck beaufschlagt, der im wesentlichen dem in der Milchmelkleitung herrschenden Unterdruck entspricht.

Dadurch, dass zunächst die Kammer mit einem Druck beaufschlagt wird, der größer ist als der in der Melkleitung herrschende Unterdruck, wird erreicht, dass der erste Ventilkörper den Durchlass und den Bypass-Kanal verschließt. Durch die an der Membrane herrschende Druckdifferenz wird diese so ausgelenkt, dass der erste Ventilkörper den Durchlass und den Bypass-Kanal vollständig verschließt.

Bevor oder während des Ansetzens des mindestens einen Melkbechers erfolgt ein Umschaltvorgang, bei dem die Kammer mit einem Druck beaufschlagt wird, der im wesentlichen dem in der Melkleitung herrschenden Unterdruck entspricht.

Dadurch, dass in dem Raum zunächst Umgebungsdruck herrscht, wird die Membrane so ausgelenkt, dass der erste Ventilkörper den Durchlass und den Bypass-Kanal freigibt, wobei der zweite Ventilkörper den Durchlass bis auf den Bypass-Kanal verschließt. Durch den angesetzten Melkbecher wird die Zufuhr von atmosphärischer Luft unterbunden. Durch den Bypass-Kanal wird in dem Raum ein Unterdruck erzeugt.

Hierdurch bedingt und beim angesetzten Melkbecher herrscht an der Membrane keine Druckdifferenz, so dass diese in eine neutrale Stellung gelangt und in dieser verharrt. In dieser neutralen Stellung geben beide Ventilkörper den Durchlass frei, so dass Milch aus dem Melkbecher durch den Durchlass hindurch zur Milchleitung strömen kann.

Wird ein Melkbecher abgeschlagen oder fällt der Melkbecher von der Zitze ab, so ist der Unterdruck in der Kammer größer als der Druck im Bereich des Durchlasses, wodurch die Membrane in die Kammer eingezogen wird. Hierdurch verschließt der zweite Ventilkörper, der der Bewegung der Membrane folgt, den Durchlass bis auf den Bypass-Kanal. Die freie Querschnittsfläche des Bypass-Kanals ist dabei vorzugsweise so gering, dass durch die Luftbewegung es vorzugsweise zu keinen oder nur geringen Vakuumschwankungen und Einsaugungen von Schmutz kommt.

Gemäß einer vorteilhaften Weiterbildung des Verfahrens wird vorgeschlagen, dass die Kammer im wesentlichen beim Melkende mit einem Druck beaufschlagt wird, der ausreichend groß ist, dass der erste Ventilkörper den Durchlass und den Bypass-Kanal verschließt. Diese Verfahrensführung hat den Vorteil, dass ein Umschaltvorgang des Ventils stattfinden kann, solange der wenigstens eine Melkbecher an der Zitze eines Tieres, insbesondere einer Kuh anliegt. Nach erfolgter Abnahme des Melkbechers tritt keine Druckschwankung in der Milchleitung ein. Insbesondere wird vorgeschlagen, dass die Kammer mit einem Druck beaufschlagt wird, der im wesentlichen dem Druck entspricht, der vor dem Ansetzen eines Melkbechers in der Kammer herrschte.

Gemäß einer weiteren vorteilhaften Ausgestaltung des Verfahrens wird vorgeschlagen, dass der zunächst in der Kammer herrschender Druck einem Atmosphärendruck entspricht. Der Vorteil dieser Verfahrensführung kann darin gesehen werden, dass nicht zwingend zwei unterschiedliche Druckquellen notwendig sind, die ein Fluid auf unterschiedlichem Druckniveau zur Verfügung stellen.

Nach einem weiteren erfinderischen Gedanken wird eine Vorrichtung zur Unterbrechung und Ausbildung einer strömungstechnischen Verbindung zwischen wenigstens einem Melkbecher und einer Milchleitung, in der ein Unterdruck herrscht, vorgeschlagen. Die Vorrichtung weist ein mit einer Membrane zusammenwirkendes Ventilorgan auf. Die Membrane begrenzt teilweise eine Kammer, die einen Anschlussstutzen aufweist. Des weiteren ist ein Bypass-Kanal vorgesehen, der in Strömungsrichtung der Milch betrachtet einen Raum vor einem Durchlass mit einem Raum hinter dem Durchlass verbindet. Das Ventilorgan ist dabei so ausgebildet, dass in Abhängigkeit von der Stellung des Ventilorgans dieses den Durchlass oder den Durchlass und den Bypass-Kanal verschließt beziehungsweise freigibt.

Durch diese erfindungsgemäße Vorrichtung wird die Möglichkeit geschaffen, dass wenigsten ein Melkbecher erst dann mit Vakuum beaufschlagt wird, wenn sich die Zitze eines Tieres im Melkbecher befindet. Diese erfindungsgemäße Vorrichtung kann unmittelbar am Melkbecher beziehungsweise im Strömungsweg zwischen Melkbecher und Milchleitung angeordnet sein. Vorzugsweise ist sie in einem jeden Strömungsweg zwischen Melkbecher und Melkleitung eines Melkzeugs eine erfindungsgemäße Vorrichtung vorgesehen.

Erfolgt ein Abfallen des Melkbechers von einer Zitze, so wird durch die erfindungsgemäße Vorrichtung eine selbsttätige Absperrung des Durchlasses, wobei der Bypass-Kanal geöffnet bleibt, erreicht, so dass Vakuumeinbrüche in der Milchleitung und das Einsaugen von verunreinigter Luft mit Schmutzpartikeln im wesentlichen vermieden werden können.

Nach einer vorteilhaften Weiterbildung der Vorrichtung wird vorgeschlagen, dass das Ventilorgan einen ersten und einen zweiten Ventilkörper, die starr miteinander verbunden sind, aufweist, wobei der Durchlass zwischen den Ventilkörpern gebildet ist. Die Ventilkörper geben den Durchlass erst dann frei, wenn an der Membrane im wesentlichen keine Druckdifferenz anliegt.

Um eine sehr gute Funktionsfähigkeit der Vorrichtung und somit eine geringere Störanfälligkeit zu erreichen, wird gemäß einer weiteren vorteilhaften Weiterbildung der Vorrichtung vorgeschlagen, dass das Ventilorgan in einer Führung geführt wird. Vorzugsweise weist das Ventilorgan eine Führungsstange auf, die in einem Kanal geführt ist.

Insbesondere wird vorgeschlagen, dass der Kanal mit dem Anschlussstutzen verbunden ist. Der Querschnitt des Kanals und der Querschnitt der Führungsstange sind dabei so bemessen, dass stets eine strömungstechnische Verbindung zwischen der Kammer und dem Anschlussstutzen sichergestellt wird.

Nach einer noch weiteren vorteilhaften Weiterbildung der Vorrichtung wird vorgeschlagen, dass wenigstens ein Sensor zur Detektion der Position des Ventilkörpers vorgesehen ist. Mit dem Sensor kann eine Steuereinrichtung und/oder eine Signaleinrichtung verbunden sein. Durch die Signaleinrichtung kann das Bedienpersonal darauf aufmerksam gemacht werden, dass ein Melkbecher von einer Zitze abfiel.

Vorzugsweise handelt es sich bei dem Sensor um einen Annäherungssensor. Insbesondere wird vorgeschlagen, dass der Sensor als ein Hall-Sensor ausgebildet ist. Die Anordnung des Sensors erfolgt vorzugsweise im Bereich des Kanals.

Weitere Vorteile und Einzelheiten der erfindungsgemäßen Verfahren sowie der erfindungsgemäßen Vorrichtung werden anhand des in der Zeichnung dargestellten Ausführungsbeispiels erläutert, wobei der Gegenstand der Erfindung nicht auf dieses Ausführungsbeispiel beschränkt ist.

Es zeigen:
- Fig. 1: schematisch ein Ausführungsbeispiel einer erfindungsgemäßen Vorrichtung, wobei die strömungstechnische Verbindung zwischen wenigstens einem Melkbecher und einer Milchleitung vollständig unterbrochen ist,
- Fig. 2: die Vorrichtung nach Figur 1, wobei eine strömungstechnische Verbindung gegeben ist und
- Fig. 3: schematisch die Vorrichtung nach Figur 1, wobei die strömungstechnische Verbindung bis auf einen Bypass-Kanal unterbrochen ist.

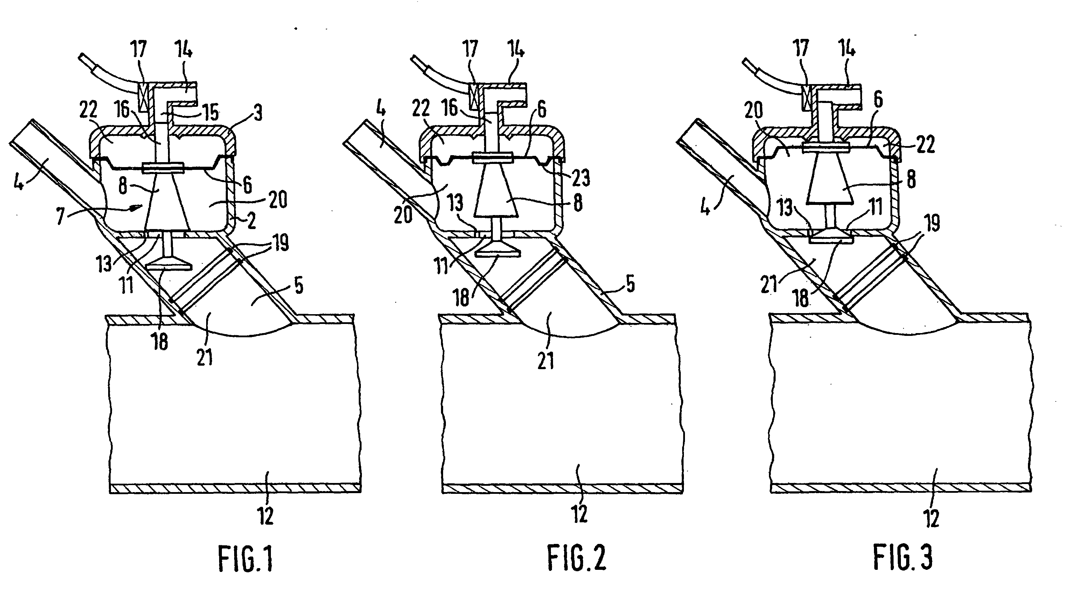

Figur 1 zeigt ein Ausführungsbeispiel einer erfindungsgemäßen Vorrichtung zur Unterbrechung oder Ausbildung einer strömungstechnischen Verbindung zwischen einem nicht dargestellten Melkbecher und einer Milchleitung 12, in der ein Unterdruck herrscht.

Die Vorrichtung weist ein Gehäuse 1 auf. Das Gehäuse 1 ist zweiteilig ausgebildet. Es weist ein Unterteil 2 und ein Oberteil 3 auf. Das Oberteil 3 und das Unterteil 2 sind miteinander gasdicht verbunden. In das Unterteil 2 mündet ein Zulaufstutzen 4, der über einen nicht dargestellten Melkschlauch mit einem Melkbecher verbunden ist.

Das Unterteil 2 weist des weiteren einen Ablaufstutzen 5 auf, der mit einer Milchleitung 12 verbunden ist. Zwischen dem Zulaufstutzen 4 und dem Ablaufstutzen 5 ist eine Wand 10 angeordnet, die einen Durchlass 11 aufweist. In der Wand 10 ist des weiteren ein Bypass-Kanal 13 vorgesehen. Der Querschnitt des Bypass-Kanals 13 ist wesentlich kleiner als der Querschnitt des Durchlasses 11.

Mit der Membrane 6 ist ein Ventilorgan 7 verbunden. Das Ventilorgan 7 weist einen ersten Ventilkörper 8 und einen zweiten Ventilkörper 18 auf. Der erste Ventilkörper 8 und der zweite Ventilkörper 18 sind mittels eines Verbindungsstücks 9 starr miteinander verbunden. Dieses erstreckt sich durch den Durchlass 11 hindurch, so dass der Durchlass 11 zwischen den Ventilkörpern 8, 18 liegt.

Der erste Ventilkörper 8 ist so ausgebildet, dass dieser in einer Schließstellung sowohl den Durchlass 11 als auch den Bypass-Kanal 13 verschließt.

In dem dargestellten Ausführungsbeispiel ist der zweite Ventilkörper 18 kegelförmig ausgebildet. Die kegelförmige Ausbildung des Ventilkörpers 18 stellt im wesentlichen sicher, dass ein sicherer Verschluss lediglich des Durchlasses 11 durch den zweiten Ventilkörper 18 ermöglicht wird.

Das Ventilorgan 7 ist mit einer Führungsstange 16 verbunden. Die Führungsstange 16 erstreckt sich in einen Kanal 15, der im Oberteil 3 des Gehäuses ausgebildet ist. Die Führungsstange 16 wird in dem Kanal 15 gleitend geführt.

Am Oberteil 3 ist ein Anschlussstutzen 14 ausgebildet, der strömungstechnisch mit dem Kanal 15 verbunden ist. Der Kanal 15 und die Führungsstange 16 haben solche Querschnittsformen, dass ein Gas über den Anschlussstutzen 14 in eine durch die Membrane 6 und das Oberteil 3 begrenzte Kammer 22 strömen kann. Das Volumen der Kammer 22 ist veränderlich. Die Kammer 22 ist über den Anschlussstutzen 14 mit einer nicht dargestellten Druckquelle verbunden.

Die Membrane 6 ist in dem dargestellten Ausführungsbeispiel zwischen dem Oberteil 3 und dem Unterteil 2 des Gehäuses 1 festgelegt. Sie weist eine umlaufende Welle 23 auf, wie sie in der Figur 2 dargestellt ist. Die Membrane 6 besteht vorzugsweise vollständig aus einem elastischen Werkstoff. Es kann ausreichend sein, wenn lediglich die Welle 23 aus einem elastischen Werkstoff besteht.

Figur 1 zeigt die Vorrichtung in einer Ausgangskonfiguration in der kein Melkbecher an eine Zitze eines Tieres angesetzt ist. Der Melkbecher ist über einen nicht dargestellten Melkschlauch mit dem Zulaufstutzen 4 verbunden.

Die Kammer 22 ist mit einem Druck beaufschlagt, der größer ist als der in der Melkleitung 12 herrschende Unterdruck. Hierzu kann die Kammer 22 über den Anschlussstutzen 14 mit Umgebungsatmosphäre verbunden sein, so dass in der Kammer 22 Umgebungsdruck herrscht. Da in der Kammer 22 Umgebungsdruck vorliegt und im Raum 20 ein Unterdruck anliegt, ist die Membrane 6 in Richtung des Durchlasses 11 ausgelenkt. Die Auslenkung der Membrane 6 ist ausreichend groß, so dass der zweite Ventilkörper 18 den Durchlass 11 und den Bypass-Kanal 13 verschließt.

Bevor ein Melkbecher an die Zitze eines Tieres angesetzt wird, wird die Kammer 22 über den Anschlussstutzen 14 mit einem Druck beaufschlagt, der im wesentlichen dem in der Melkleitung 12 herrschenden Unterdruck entspricht. Im Raum 20 herrscht Atmosphärendruck, da der an den Zulaufstutzen 4 angeschlossene Melkbecher in Verbindung mit der Umgebungsatmosphäre steht. Dadurch bewegen sich die Membrane 6 und das Ventilorgan 7 in Richtung des Anschlussstutzens 14. Der erste Ventilkörper 8 gibt dabei den Durchlass 11 und den Bypass-Kanal 13 frei, wobei der zweite Ventilköper 18 den Durchlass 11 bis auf den Bypass-Kanal 13 verschließt, während der Melkbecher angesetzt wird, wie dies in der Fig. 3 dargestellt ist.

Ist der Melkbecher an die Zitze angesetzt, so kann über den Melkbecher annähernd keine Atmosphärenluft mehr einströmen, so dass im Raum 20 über den Bypass-Kanal 13 der gleiche Druck aufgebaut wird wie in der Kammer 22. Die Membrane 6 nimmt ihre neutrale Stellung ein, wie in der Figur 2 dargestellt ist. Weder der erste Ventilkörper 8 noch der zweite Ventilkörper 18 schließen den Durchlass 11 in der neutralen Stellung der Membrane 6.

Wird der Melkbecher während des Melkens abgeschlagen, so strömt über den offenen Melkbecher Atmosphärenluft ein, so dass sich in dem Raum 20 Atmosphärendruck einstellt. Da in der Kammer 22 weiterhin ein Unterdruck herrscht, der dem Unterdruck in der Milchleitung 12 entspricht, wird die Membrane 6 in Richtung des Anschlussstutzens 14 bewegt, wobei der zweite Ventilkörper 18 zur Anlage an den Rand des Durchlasses 11 gelangt und diesen verschließt, wobei der Bypass-Kanal 13 offen bleibt.

Durch den Sensor 10 der im Bereich eines Kanals 15 angeordnet ist, kann die Stellung des Ventilorgans 7 detektiert werden. Figur 3 zeigt die Stellung des Ventilorgans 7, wenn während eines Melkvorgangs der Melkbecher von einer Zitze abfiel. Der Sensor 17 ist vorzugsweise mit einer Signaleinrichtung verbunden, durch die einem Melker signalisiert wird, dass ein Melkbecher abfiel.

Der Raum 20 und der Raum 21 sind durch den Bypass-Kanal 13 miteinander verbunden. Wird der abgefallene Melkbecher erneut an die Zitze eines Tieres gebracht, so bildet sich im Raum 20 ein Unterdruck aus, der bei einer vollständigen Ausbildung des Unterdrucks dem Druck in der Kammer 22 entspricht. Dadurch bedingt herrscht an der Membrane 6 keine Druckdifferenz, so dass die Membrane 6 in die neutrale Stellung, wie sie in Figur 2 dargestellt ist, gelangt. Das Ventilorgan 7 bewegt sich gleichzeitig mit der Membrane 6. Der zweite Ventilkörper 18 gibt den Durchlass 11 frei, so dass eine strömungstechnische Verbindung zwischen dem Melkbecher und der Milchleitung 12 wieder hergestellt wird. Diese Situation ist in Figur 2 dargestellt.

Figur 1 zeigt, dass in dem Ablaufstutzen 5 zwei Elektroden 19 vorgesehen sind, die zur Bestimmung des Milchflusses dienen. Statt der Elektroden 19 können auch andere Einrichtungen vorgesehen sein, die den Milchfluss bestimmen. Die Größe des Milchflusses ist eine charakteristische Kenngröße für den Verlauf eines Melkvorgangs an einem Tier. Ist aus dem Verlauf des Milchflusses über die Zeit, erkennbar, dass ein Melkende naht, so wird die Kammer 22 über den Anschlussstutzen 14 mit der Umgebungsatmosphäre verbunden, so dass der zweite Ventilkörper 18 den Durchlass 11 verschließt.

Die erfindungsgemäße Vorrichtung ist besonders geeignet in Verbindung mit Melkbechern, die einen zyklischen Lufteinlass zur Verbesserung des Milchtransports haben. Dieser Lufteinlass kann während des Ansetzens des Melkbechers unterbunden werden, so dass ein schnellerer Vakuumaufbau im Melkbecher geschieht und das Ventilorgan auch bei sehr kleinen Durchmessern des Bypass-Kanals nach sehr kurzer Zeit den Durchlass freigibt.

### Bezugszeichenliste

- 1: Gehäuse
- 2: Unterteil
- 3: Oberteil
- 4: Zulaufstutzen
- 5: Ablaufstutzen
- 6: Membrane
- 7: Ventilorgan
- 8: erster Ventilkörper
- 9: Verbindungsstück
- 10: Wand
- 11: Durchlass
- 12: Milchleitung
- 13: Bypass-Kanal
- 14: Anschlussstutzen
- 15: Kanal
- 16: Führungsstange
- 17: Sensor
- 18: zweiter Ventilkörper
- 19: Elektrode
- 20: Raum
- 21: Raum
- 22: Kammer
- 23: Welle

## Patentansprüche

1. Verfahren zur Unterbrechung oder Ausbildung einer strömungstechnischen Verbindung zwischen wenigsten einem Melkbecher und einer Milchleitung (12), in der ein Unterdruck herrscht, wobei im Milch-Strömungsweg eine Vorrichtung vorgesehen ist, wobei die Vorrichtung ein mit einer Membrane (6) zusammenwirkendes Ventilorgan (7) aufweist, die Membrane (6) teilweise eine Kammer (22) mit einem Anschlussstutzen (14) begrenzt, und ein Bypass-Kanal (13) vorgesehen ist, der in Strömungsrichtung der Milch betrachtet einen Raum (20) vor einem Durchlass (11) mit einem Raum (21) hinter dem Durchlass (11) verbindet, wobei das Ventilorgan (7) so ausgebildet ist, dass dieses entweder den Durchlass (11) oder den Durchlass (11) und den Bypass-Kanal (13) verschließt bzw. freigibt, bei dem zunächst die Kammer (22) mit einem Druck beaufschlagt wird, der größer ist als der in der Milchleitung (12) herrschende Druck, die Kammer (22) wenigstens vor oder während eines Ansetzens des mindestens einen Melkbechers an eine Zitze mit einem Druck beaufschlagt wird, der im wesentlichen dem in der Melkleitung (12) herrschenden Unterdruck entspricht.

2. Verfahren nach Anspruch 1, bei dem die Kammer (22) im wesentlichen beim Melkende mit einem Druck beaufschlagt wird, der ausreichend groß ist, dass das Ventilorgan (7) den Durchlass (11) und den Bypass-Kanal (13) verschließt.

3. Verfahren nach Anspruch 1 oder 2, bei dem die Kammer (22) im wesentlichen beim Melkende mit einem Druck beaufschlagt wird, der im wesentlichen dem zunächst in der Kammer (22) herrschenden Druck entspricht.

4. Verfahren nach Anspruch 1, 2 oder 3, bei dem der zunächst in der Kammer (22) herrschende Druck einem Atmosphärendruck entspricht.

5. Vorrichtung zur Unterbrechung oder Ausbildung einer strömungstechnischen Verbindung zwischen wenigsten einem Melkbecher und einer Milchleitung (12), in der ein Unterdruck herrscht, wobei die Vorrichtung ein mit einer Membrane (6) zusammenwirkendes Ventilorgan (7) aufweist, die Membrane (6) teilweise eine Kammer (22) mit einem Anschlussstutzen (14) begrenzt, und ein Bypass-Kanal (13) vorgesehen ist, der in Strömungsrichtung der Milch betrachtet einen Raum (20) vor einem Durchlass (11) mit einem Raum (21) hinter dem Durchlass (11) verbindet, wobei das Ventilorgan (7) so ausgebildet ist, dass dieses entweder den Durchlass (11) oder den Durchlass (11) und den Bypass-Kanal (13) verschließt bzw. freigibt.

6. Vorrichtung nach Anspruch 5, **dadurch gekennzeichnet, dass** das Ventilorgan (7) einen ersten (8) und einen zweiten (18) Ventilkörper, die starr miteinander verbunden sind, aufweist, zwischen denen der Durchlass (11) angeordnet ist, wobei durch den ersten (8) Ventilkörper der Durchlass (11) und der Bypass-Kanal (13) verschließbar sind.

7. Vorrichtung nach Anspruch 5 oder 6 **dadurch gekennzeichnet, dass** das Ventilorgan (7) in einer Führung (15, 16) geführt ist.

8. Vorrichtung nach Anspruch 7, **dadurch gekennzeichnet, dass** das Ventilorgan (7) eine Führungsstange (16) aufweist, die in einem Kanal (15) geführt ist.

9. Vorrichtung nach Anspruch 8, **dadurch gekennzeichnet, dass** der Kanal (15) mit dem Anschlussstutzen (14) verbunden ist.

10. Vorrichtung nach einem der Ansprüche 5 bis 9, **dadurch gekennzeichnet, dass** wenigstens ein Sensor (17) zur Detektion der Position des Ventilorgans (7) vorgesehen ist.

11. Vorrichtung nach Anspruch 8 und 10, **dadurch gekennzeichnet, dass** der Sensor (17) im Bereich des Kanals (15) angeordnet ist.

12. Vorrichtung nach Anspruch 10 oder 11, **dadurch gekennzeichnet, dass** der Sensor (17) ein Näherungssensor ist.

## Claims

1. Method for disconnecting or establishing a flow connection between at least a teat cup and a milk line (12), in which there is a depression, wherein a device is provided in the milk flow path, which device has a valve member (7) cooperating with a membrane (6), the membrane (6) partially limiting a chamber (22) with a connection branch (14), and there is provided a bypass channel (13), which, viewed in the direction of the milk flow, connects a space (20) upstream of a passage (11) with a space (21) downstream of the passage (11), the valve member (7) being realized in such a way that it closes or releases respectively either the passage (11) or the passage (11) and the bypass channel (13), in which method the chamber (22) is previously exposed to a pressure that is bigger than the pressure prevailing in the milk line (12) and the chamber (22) is exposed to a pressure at least before or during the application of the at least one teat cup to a teat, the pressure substantially corresponding to the depression prevailing in the milk line (12).

2. Method according to claim 1, wherein substantially at the end of milking the chamber (22) is exposed to a pressure, which is big enough that the valve member (7) closes the passage (11) and the bypass channel (13).

3. Method according to claim 1 or 2, wherein substantially at the end of milking the chamber (22) is exposed to a pressure, which substantially corresponds to the pressure prevailing previously in the chamber (22).

4. Method according to claim 1, 2 or 3, wherein the pressure previously prevailing in the chamber (22) corresponds to an atmospheric pressure.

5. Device for disconnecting or establishing a flow connection between at least a teat cup and a milk line (12), in which there is a depression, wherein the device has a valve member (7) cooperating with a membrane (6), the membrane (6) partially limiting a chamber (22) with a connection branch (14), and there is provided a bypass channel (13), which, viewed in the direction of the milk flow, connects a space (20) upstream of a passage (11) to a space (21) downstream of the passage (11), the valve member (7) being realized in such a way that it closes or releases respectively either the passage (11) or the passage (11) and the bypass channel (13).

6. Device according to claim 5, **characterized in that** the valve member (7) has a first (8) and a second (18) valve body being connected rigidly to each other, between which the passage (11) is arranged, wherein both the passage (11) and the bypass channel (13) are closable by the first valve body (8).

7. Device according to claim 5 or 6, **characterized in that** the valve member (7) is guided in a guide (15, 16).

8. Device according to claim 7, **characterized in that** the valve member has a guide rod (16), which is guided in a channel (15).

9. Device according to claim 8, **characterized in that** the channel (15) is connected to the connection branch (14).

10. Device according to one of claims 5 to 9, **characterized in that** at least one sensor (17) is provided for detecting the position of the valve member (7).

11. Device according to claim 8 and 10, **characterized in that** the sensor (17) is arranged in the region of the channel (15).

12. Device according to claim 10 or 11, **characterized in that** the sensor (17) is a proximity sensor.

## Revendications

1. Procédé pour déconnecter ou pour établir une connexion de flux entre au moins un gobelet trayeur et une conduite de lait (12), dans laquelle règne une dépression, dans quel cas un dispositif est prévu dans le trajet du flux de lait, le dispositif présentant un organe de vanne (7) coopérant avec une membrane (6), la membrane (6) limitant partiellement une chambre (22) avec une tubulure de raccordement (14) et un canal de dérivation (13) étant prévu qui, vu dans le sens d'écoulement du lait, relie un espace (20) en amont d'un passage (11) avec un espace (21) en aval du passage (11), l'organe de vanne (7) étant réalisé de telle façon que celui-ci obture soit le passage (11) soit le passage (11) et le canal de dérivation (13) ou le/les libère, procédé dans lequel la chambre (22) est d'abord soumise à une pression qui est plus élevée que la pression qui règne dans la conduite de lait (12), la chambre (22) est soumise à une pression au moins avant ou durant l'application de l'au moins un gobelet trayeur sur un trayon, la pression correspondant sensiblement à la dépression régnant dans la conduite de lait (12).

2. Procédé selon la revendication 1, dans lequel la chambre (22) est soumise à une pression sensiblement à la fin de la traite, la pression étant suffisamment élevée que l'organe de vanne (7) obture le passage (11) et le canal de dérivation (13).

3. Procédé selon la revendication 1 ou 2, dans lequel la chambre (22) est soumise à une pression sensiblement à la fin de la traite, la pression correspondant sensiblement à la pression qui règne d'abord dans la chambre (22).

4. Procédé selon la revendication 1, 2 ou 3, dans lequel la pression régnante d'abord dans la chambre (22) correspond à une pression atmosphérique.

5. Dispositif pour déconnecter ou pour établir une connexion de flux entre au moins un gobelet trayeur et une conduite de lait (12), dans laquelle règne une dépression, dans quel cas le dispositif présente un organe de vanne (7) coopérant avec une membrane (6), la membrane (6) limitant partiellement une chambre (22) avec une tubulure de raccordement (14) et un canal de dérivation (13) étant prévu qui, vu dans le sens d'écoulement du lait, relie un espace (20) en amont d'un passage (11) avec un espace (21) en aval du passage (11), l'organe de vanne (7) étant réalisé de telle façon que celui-ci obture soit le passage (11) soit le passage (11) et le canal de dérivation (13) ou le/les libère.

6. Dispositif selon la revendication 5, **caractérisé en ce que** l'organe de vanne (7) a un premier (8) et un deuxième (18) corps de vanne qui sont reliés l'un à l'autre de manière rigide, entre lesquels est agencé le passage (11), dans quel cas le passage (11) et le canal de dérivation (13) peuvent être obturés par le premier corps de vanne (8).

7. Dispositif selon la revendication 5 ou 6, **caractérisé en ce que** l'organe de vanne (7) est guidé dans un guide (15, 16).

8. Dispositif selon la revendication 7, **caractérisé en ce que** l'organe de vanne (7) a une barre de guidage (16) qui est guidée dans un canal (15).

9. Dispositif selon la revendication 8, **caractérisé en ce que** le canal (15) est relié à la tubulure de raccordement (14).

10. Dispositif selon l'une des revendications 5 à 9, **caractérisé en ce qu'**au moins un capteur (17) est prévu pour détecter la position de l'organe de vanne (7).

11. Dispositif selon la revendication 8 et 10, **caractérisé en ce que** le capteur (17) est agencé dans la région du canal (15).

12. Dispositif selon la revendication 10 ou 11, **caractérisé en ce que** le capteur (17) est un capteur de proximité.
